(19) Europäisches Patentamt / European Patent Office / Office européen des brevets

(11) **EP 2 709 325 A1**

(12) **EUROPEAN PATENT APPLICATION**

(43) Date of publication:
**19.03.2014 Bulletin 2014/12**

(51) Int Cl.:
*H04L 25/03* (2006.01)    *H04L 27/20* (2006.01)
*H04L 25/02* (2006.01)    *H04L 1/06* (2006.01)
*H04B 7/04* (2006.01)

(21) Application number: **12306110.3**

(22) Date of filing: **14.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Chen, Yejian
70825 Korntal-Münchingen (DE)**
• **ten Brink, Stephan
70469 Stuttgart (DE)**

(74) Representative: **2SPL Patentanwälte
Postfach 15 17 23
80050 München (DE)**

Remarks:
Amended claims in accordance with Rule 137(2) EPC.

(54) **Apparatuses, methods and computer programs for a wireless transmitter and for a wireless receiver with superimposed pilot and data symbols**

(57)    Embodiments provide an apparatus, a method and a computer program for controlling transmission points in a mobile communication system. The apparatus 10 for a wireless transmitter comprises means for composing 12 a transmit symbol. The transmit symbol is composed of a symbol comprising information on payload data and a reference symbol. The apparatus 10 further comprises means for transmitting 14 the transmit symbol. The apparatus 20 for a wireless receiver comprises means for receiving 22 a receive symbol. The receive symbol is based on a transmit symbol being transmitted by a transmitter and being composed of a symbol comprising information on payload data and a reference symbol. The apparatus 20 further comprises means for detecting 24 the payload data based on the receive symbol.

Fig. 1

**Description**

Embodiments of the present invention relate to wireless transmission, more particularly but not exclusively to transmission and reception and data detection in wireless communications.

Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. As operators are seeking to extend the coverage and capacity of their networks advanced transmission concepts are one way forward.
In conventional systems reference or pilot symbols are transmitted to enable channel estimation of the wireless channel at the receiver. In other words, known transmit symbols are transmitted on known radio resources, i.e. at known times such as specific radio slots, at known frequencies such as specific sub-bands, known antennas or beams, known codes etc. As the receiver has knowledge on the reference symbols themselves as well as on the radio resources they use, the receiver can estimate the radio channel the symbol has experienced. Moreover, said radio channel estimate can be assumed to represent the radio channel, i.e. to be valid, for a certain time, within a certain bandwidth, for a certain antenna or beam, etc. As know from prior art the wireless channel undergoes many propagation effects such as multi path propagation, shadowing, diffraction, deflection, etc. all causing the wireless channel to change with time, i.e. to be time variant, with frequency, i.e. to be frequency variant, with location, i.e. to be space variant, etc.
As the data demands gets higher systems tend to use higher bandwidths, shorter time granularities, more antennas, spatial multiplexing concepts etc. Therewith, more and more radio resources are used for reference symbols. Reference symbols are used in a grid, i.e. a reference symbol is transmitted at predefined frequency spacing within the coherence bandwidth of the radio channel, e.g. every predetermined number of sub-carriers, to enable the receiver to estimate and interpolate the radio channel between these sub-carriers. Moreover, a reference symbol is transmitted at predefined time spacing within the coherence time of the radio channel, e.g. every predetermined number of symbols, to enable the receiver to estimate and interpolate the radio channel between these symbols. The same holds in the spatial domain with respect to the coherence length of the radio channel, etc. In other words, as the system capacity grows more and more radio resources are used for reference symbol transmission to enable channel estimation for the more and more complex systems.

Summary

Embodiments are based on the finding that discrete pilot grids may at least partly be replaced with superimposed pilot symbols. Embodiments may provide a higher spectral efficiency than conventional systems due to the utilization of superimposed pilot symbols. Moreover, embodiments may make use of superimposed pilot-aided joint channel and data estimation algorithm for Multiple-Input-Multiple-Output (MIMO) systems. Some embodiments may also be used in single input and/or single output systems. In embodiments superimposed pilots can be embedded into the transmit signal in some symbols, in some embodiments even in every symbol, such that there is training data available at each time, frequency, spatial, code, etc. instance.
Embodiments may provide the advantage that a higher efficiency can be achieved as compared to using discrete pilot symbols, which is generally adopted by the current wireless standards. Obviously, the discrete pilots have to be periodically allocated in the time and frequency resource, and can thus reduce the overall achievable rate. Especially, discrete pilots can be sensitive to the fading rate of wireless channels. Namely, if the fading rate of wireless channels increases, the corresponding link performance can significantly degrade due to insufficient pilot insertion rate, i.e. the distance between two consecutive pilot symbols may become too large, e.g. larger than the coherence time or bandwidth.
Embodiments provide an apparatus for a wireless transmitter, i.e. embodiments may provide said apparatus to be operated by or included in a wireless transmitter. The apparatus will also be referred to as transmitter apparatus. Embodiments also provide an apparatus for a wireless receiver, i.e. embodiments may provide said apparatus to be operated by or included in a wireless receiver. This apparatus will also be referred to as receiver apparatus. In embodiments the transmitter or receiver apparatus can be comprised in a base station transceiver or in a mobile station transceiver of a mobile communication system. In other embodiments the apparatuses may be comprised in a wireless transceiver of any kind.
In some embodiments the transmitter apparatus and/or the receiver apparatus may be comprised in a wireless or mobile communication system. The mobile communication system may, for example, correspond to one of the mobile communication systems standardized by the 3rd Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as User Equipment (UE) or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a base station transceiver or a NodeB, an eNodeB, respectively. In some embodiments a cell may correspond to a sector. For example, sectors can be achieved using sector antennas, which provide a characteristic for covering an angular section around a base station transceiver. In some embodiments, a base station transceiver may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

In embodiments the transmitter comprises means for composing a transmit symbol, the transmit symbol being composed of a symbol comprising information on payload data and a reference symbol. The means for composing may correspond to a composer, i.e. an entity, which puts together or assembles symbols, which are then processed and transmitted. For example, the means for composing may be implemented in a Digital Signal Processor (DSP), which generates complex valued symbols by adding a complex valued symbol, to which a certain number of payload bits have been mapped, to a complex valued reference or pilot symbol.

The transmitter further comprises means for transmitting the transmit symbol. In embodiments, the means for transmitting may correspond to any transmitter, such as a transmitter complying with one of the above-described communication systems or standards. Hence, in embodiments, the means for transmitting may further comprise typical components of a transmitter, such as a power amplifier, filtering means, antennas, etc. In further embodiments, the transmitter may even comprise a mixer for converting the transmit symbol from a base band to a transmission band, more filters, a preamplifier, etc.

In simple words, the transmitter apparatus is operable to construct, build or generate a transmit symbol, which comprises a payload component and a reference component. The reference component is known to an according receiver. Nevertheless, payload data and reference data form a single combined transmit symbol, which is then transmitted to the receiver. Embodiments may therewith provide the advantage that there are no dedicated reference symbols, i.e. symbols which only comprise reference data and no payload data and hence every symbol can carry payload data. Moreover, it is an advantage that every symbol may comprise a reference data part, so channel estimation can be improved as interpolation between two or more points of support from a grid of reference symbols can be avoided.

In further embodiments, the transmitter apparatus may comprise a plurality of transmit antennas, i.e. two or more transmit antennas. In embodiments the transmitter apparatus can be operable to perform any spatial transmission concept, such as space-time coding, spatial multiplexing, beamforming, cooperative multipoint transmission, etc. In line with the plurality of transmit antennas, the means for composing can be operable to compose a plurality of transmit symbols being composed of symbols comprising information on payload data and reference symbols or data for the plurality of transmit antennas. In other words, composed or superimposed transmit symbols may be transmitted on each of the plurality of transmit antennas. Moreover, the means for transmitting can be operable to transmit the plurality of transmit symbols on the plurality of transmit antennas simultaneously. Hence, any multiple input transmission concept may be used with the transmitter apparatus, some of which will be detailed subsequently. The means for composing can be operable to compose the transmit symbol by superimposing the symbol comprising the information on the payload data with the reference symbol according to a predetermined weighting. In line with what was said above, the symbols may be added, for example as complex valued symbols in the baseband. The symbols may be weighted. For example, the data may be weighted with a desired energy per data symbol and the reference symbol may be weighted with the desired energy per reference symbol. The relation of the weights between the energy of the data symbol and the energy of the reference symbol can be different in different embodiments, for example, expressed in decibel the relation may be data energy to reference symbol energy 0dB, 3dB, 6dB, 10dB, 20dB, 30dB, etc.

The predetermined weighting can correspond to a payload transmit energy for the symbol comprising information on the payload data and a pilot transmit energy for the reference symbol or data. In other words, in some embodiments, the weighting may be adapted as transmissions go along. For example, based on the feedback received from a receiver of the payload data, the transmitter may determine a quality of the transmission, for example, in terms of an error rate. Based on the error rate, or, for example, based on an average number of retransmissions needed to transmit a payload data packet, the transmitter may change the relation of pilot energy and data energy in the transmit symbols. In further embodiments the means for composing and/or the means for transmitting can be operable to introduce a phase shift to the transmit symbol. In other words, in certain transmission concepts, for example, when using spatial multiplexing, the subsequent processing carried out on the receiver side may require matrix inversions. Phase shifts introduced on the transmitter side may be used to assure that a certain matrix of transmit symbols, which may be used in subsequent processing, is invertible.

As it has already been mentioned above, embodiments also provide a receiver apparatus. The receiver apparatus comprises means for receiving a receive symbol. In embodiments the means for receiving may correspond to any receiver, for example, a receiver compliant to one of the above communication systems or communication standards. The receiver may comprise typical receiver components, such as receive antennas, low-noise amplifiers, filter circuits or filter means, etc. In further embodiments, the receiver may even comprise a mixer for converting a receive signal or symbol from the transmission band to the base band and according base band processing means. For example, the receiver may comprise a digital signal processor for processing receive symbols in the baseband, after they have been down-converted from the transmission band and digitized. In line with what was described above with respect to the transmit symbol, the receive symbol is based on a transmit symbol being transmitted by a transmitter and being composed of a symbol comprising information on payload data and a reference symbol. The receiver further comprises means for detecting the payload data based on the receive symbol. In embodiments the means for detecting can be a detector. The means for detecting can be implemented for example on a DSP that runs according software. From the receive symbols, the payload data may be detected based on a pilot-aided joint channel and data estimation.

In other words, in embodiments, the means for detecting can be operable for jointly estimating the payload data and a radio channel between the receiver and the transmitter based on the received symbol. For example, the means for detecting can be operable to use maximum likelihood detection, for example, with the help of a trellis diagram. The means for detecting can be operable to determine a hypothesis on the transmit symbol and then determine a channel estimate based on said hypothesis. Naturally, a plurality of such hypotheses is possible; accordingly, the means for detecting may comprise a memory, which allows for processing and storing a plurality of said hypotheses.

Moreover, in some embodiments, the receive symbol can be based on a plurality of transmit symbols being transmitted using a plurality of transmit antennas by the transmitter. For example, if multiple input transmission is used, each receive antenna of the receiver apparatus receives a superposition of multiple transmit symbols. The receiver apparatus can then be operable to carry out the according processing concept, as, for example, space-time coding or decoding, spatial (de-)multiplexing, etc. Correspondingly, the means for receiving may comprise a plurality of receive antennas and can be operable to receive a plurality of receive symbols using the plurality of receive antennas. That is to say, in embodiments the receiver apparatus may carry out full spatial processing. As it has already been mentioned before, maximum likelihood detection can be used. In some embodiments, the means for detecting can be operable to determine a reliability measure for one or more transmit symbols based on one or more receive symbols.

One reliability measure may be the likelihood ratio or a log likelihood ratio. Moreover, the means for detecting can be operable to detect the payload data based on the maximum likelihood of the one or more transmit symbols in consequence of the one or more receive symbols. In some embodiments, the means for detecting can be operable to perform sequence estimation based on a block of transmit and receive symbols. Within such a block of receive symbols, the means for detecting may perform forward and backward iterations, updating log likelihood ratios, reliability measures, respectively. After terminating the iterations, the means for detecting can be operable to decide or detect on the most probable data hypothesis, i.e. on the data combination that is most likely.

Embodiments further provide a method for a wireless transmitter. The method comprises composing a transmit symbol, the transmit symbol being composed of a symbol comprising information on payload data and a reference symbol. Furthermore, the method comprises transmitting the transmit symbol.

Embodiments further provide a method for a wireless receiver. The method comprises receiving a receive symbol. The receive symbol is based on the transmit symbol being transmitted by the transmitter and being composed of a symbol comprising information on payload data and a reference symbol. Furthermore, the method comprises detecting the payload data based on the receive symbol.

Moreover, embodiments provide a computer program having a program code for performing one of the above-described methods, when a computer program is executed on a computer or a processor.

Embodiments may provide the advantage that a joint channel and data estimation is provided for advance processing concepts, such as MIMO systems, which can be based on superimposed pilot symbols. Embodiments may provide a very robust and near capacity concept, i.e. embodiments may provide a capacity of a wireless system which is improved or near optimum. As compared to conventional concepts, the capacity may be improved. Embodiments further provide the advantage that no or reduced dedicated time and frequency resources may be required, as no or at least less discrete pilot symbols can be utilized. Embodiments may even outperform conventional joint channel and data estimation solutions. Embodiments may be very attractive for future 4G/5G wireless communication systems due their low pilot-related physical overheads and robustness, which can be introduced by, for example, trellis detection. Moreover, embodiments may provide the advantage that space-time coding and spatial multiplexing transmission modes and their variants or extensions can be used including WIreless FIdelity (WIFI) 802.11n and LTE, as well as with 5G systems.

Brief Description of the Figures

Some other features or aspects will be described using the following non-limiting embodiments of apparatuses and/or methods and/or computer programs by way of example only, and with reference to the accompanying Figures, in which

Fig. 1 illustrates an embodiment of a transmitter apparatus and an embodiment of a receiver apparatus;

Fig. 2 illustrates a $2\times1$ space-time coding scheme used in an embodiment;

Fig. 3 illustrates a $2\times2$ MIMO system in an embodiment;

Fig. 4a shows a trellis structure for a $2\times1$ space-time scheme or a $2\times2$ MIMO scheme in an embodiment;

Fig. 4b shows details of a trellis structure for a $2\times1$ space-time scheme in an embodiment;

Fig. 4c shows details of a trellis structure for a $2\times2$ MIMO spatial multiplexing system;

Fig. 4d shows details of a MIMO spatial multiplexing transmitter;

Fig. 5 illustrates simulation results on achievable rates versus signal-to-noise ratios in an embodiment using space-time coding;

Fig. 6 shows simulation results of achievable rates versus signal-to-noise ratio in an embodiment using $2\times2$ MIMO;

Fig. 7 illustrates further simulation results of achievable rates versus different time frequency products of the radio channel in embodiments;

Fig. 8 illustrates an extension to $4\times2$ MIMO in an embodiment;

Fig. 9 shows an extension for $4\times4$ MIMO in an embodiment;

Fig. 10 illustrates simulation results on achievable rates versus signal-to-noise ratio in a $4\times4$ MIMO embodiment;

Fig. 11 illustrates achievable rates versus the signal-to-noise ratio in a $6\times6$ MIMO embodiment;

Fig. 12 shows a block diagram of an embodiment of a method for a wireless transmitter; and

Fig. 13 shows a block diagram of an embodiment of a method for a wireless receiver.

Description of Some Embodiments

Various embodiments will now be described in more detail with reference to the accompanying drawings. In the figures, the thicknesses of lines, layers and/or regions may be exaggerated for clarity.
Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

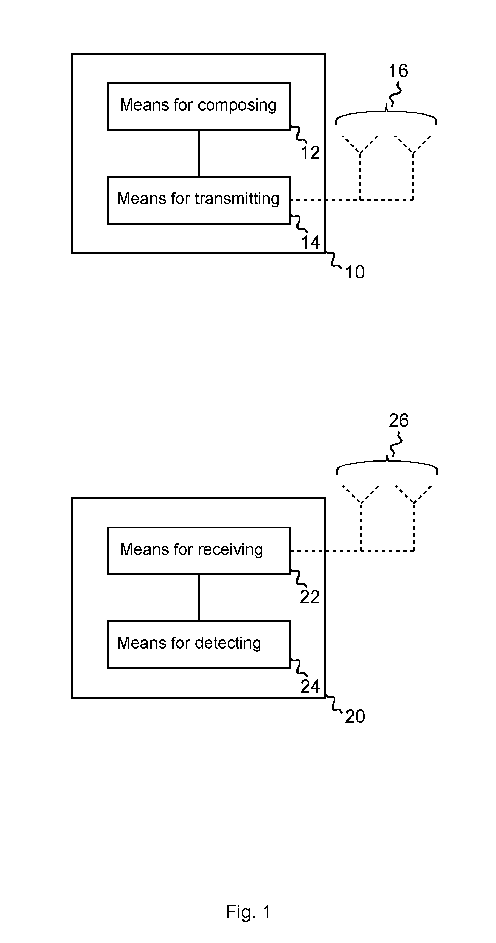

Fig. 1 shows an embodiment of the transmitter apparatus 10. The transmitter apparatus 10 comprises means for composing 12 a transmit symbol. The transmit symbol is composed of a symbol comprising information on payload data and a reference symbol. Moreover, the transmit apparatus comprises means for transmitting 14 the transmit symbol. As the Figure shows, the means for composing 12 is coupled to the means for transmitting.

Fig. 1 further shows a plurality of transmit antennas 16, which are shown in dotted lines, indicating that they are optional. In the present embodiment, the transmitter apparatus 10 comprises the plurality of transmit antennas 16. Moreover, the means for composing 12 is operable to compose a plurality of transmit symbols being composed of symbols comprising information on payload data and reference symbols for the plurality of transmit antennas 16. The means for transmitting 14 is operable to transmit the plurality of transmit symbols on the plurality of transmit antennas 16 simultaneously.

Fig. 1 further illustrates an embodiment of the receiver apparatus 20. The apparatus 20 for a wireless receiver comprises means for receiving 22 a receive symbol. According to the above, the receive symbol is based on a transmit symbol being transmitted by a transmitter, i.e. the transmitter apparatus 10, and being composed of a symbol comprising information on payload data and a reference symbol. The receiver apparatus 20 further comprises means for detecting 24 the payload data based on the receive symbol. As Fig. 1 shows, the means for receiving 22 is coupled to the means for detecting 24. Fig. 1 further shows that the receiver apparatus 20 comprises a plurality of receive antennas 26, which are also shown in dotted lines indicating that they are optional. Moreover, the means for receiving 22 is operable to receive a plurality of receive symbols using the plurality of receive antennas 26.

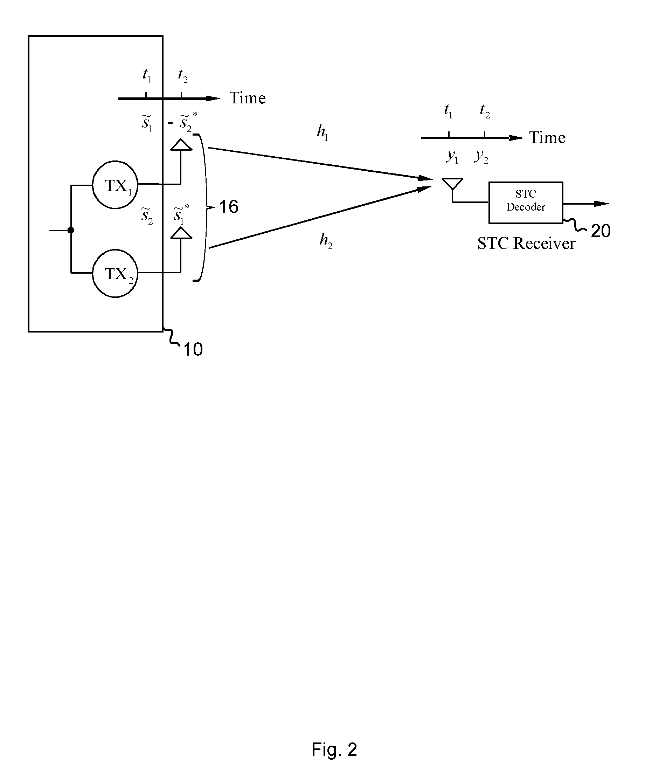

In the following two basic embodiments will be described first. In order to further detail the embodiments, a 2×1 Multiple-Input-Single-Output (MISO) scheme with an Alamouti Space-Time Code (STC) and a 2×2 MIMO scheme with Spatial Multiplexing (SMX), will be used in the two first embodiments. Fig. 2 will be used to explain the first embodiment. Fig. 2 shows an embodiment utilizing the so-called Alamouti STC. Fig. 2 shows the transmitter apparatus 10 on the left-hand side indicating that it operates two antennas 16. Hence, two transmission stages $TX_1$ and $TX_2$ are shown. As Fig. 2 further shows, signals are transmitted to the STC receiver 20. For the STC it is assumed, that transmission and reception are organized in two subsequent time slots $t_1$ and $t_2$. Fig. 2 further shows two time lines on the transmitter 10 side and the receiver 20 side. The transmit symbols which are transmitted on the two transmit antennas by the transmitter 10 in time slot $t_1$ are represented by $\tilde{s}_1$ and $\tilde{s}_2$. The two transmit symbols that are transmitted during the second time slot $t_2$ are called $-\tilde{s}_2^*$ and $\tilde{s}_1^*$, where $^*$ indicates the complex conjugate. The two channel representations are termed $h_1$ and $h_2$, the one between the first transmit antenna and the receive antenna at the receiver 20 side is called $h_1$ and the radio channel representation between the second transmit antenna of the transmitter 10 and the receive antenna of the receiver 20 is represented by $h_2$. The receive symbol received at the time slot $t_1$ is referred to as $y_1$, $y_2$ for the second time slot $t_2$, respectively.

As shown in Fig. 2, during two consecutive time instants $t_1$ and $t_2$, both channel coefficients $h_1$ and $h_2$ are assumed to be invariant. Hence, within the time instant $t_1$, the data symbols $s_1$ and $s_2$ are transmitted from both transmit antennas, respectively. Within time instant $t_2$, the redundancy $-s_2^*$ and $s_1^*$ are transmitted. Furthermore, the superimposed pilots $p_1$ and $p_2$ are additively transmitted with the data symbols. It holds,

$$\widetilde{s}_1 = \sqrt{E_d}\,s_1 + \sqrt{E_p}\,p_1 \ \text{ and } \ \widetilde{s}_2 = \sqrt{E_d}\,s_2 + \sqrt{E_p}\,p_2,$$

where $\sqrt{E_d}$ and $\sqrt{E_p}$ denote the transmit power of data symbols and pilot symbols, respectively. With two temporally consecutive observations at receiver, namely $y_1$ and $y_2$, the system equation of the Alamouti STC scheme can be obtained as

$$\begin{bmatrix} y_1 \\ y_2 \end{bmatrix} = \begin{bmatrix} \sqrt{E_d}\,s_1 + \sqrt{E_p}\,p_1 & \sqrt{E_d}\,s_2 + \sqrt{E_p}\,p_2 \\ -\sqrt{E_d}\,s_2^* - \sqrt{E_p}\,p_2^* & \sqrt{E_d}\,s_1^* + \sqrt{E_p}\,p_1^* \end{bmatrix} \cdot \begin{bmatrix} h_1 \\ h_2 \end{bmatrix} + \begin{bmatrix} n_1 \\ n_2 \end{bmatrix} = \begin{bmatrix} \widetilde{s}_1 & \widetilde{s}_2 \\ -\widetilde{s}_2^* & \widetilde{s}_1^* \end{bmatrix} \cdot \begin{bmatrix} h_1 \\ h_2 \end{bmatrix} + \begin{bmatrix} n_1 \\ n_2 \end{bmatrix}, \ (1)$$

where $n_1$ and $n_2$ represent Additive White Gaussian Noise (AWGN) with variance $\sigma_{\text{Pre}}^2$.

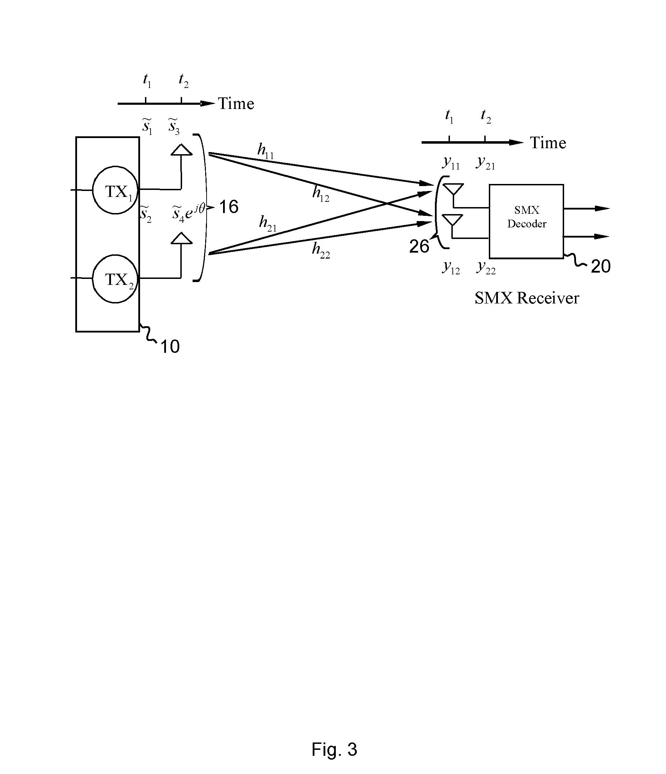

Fig. 3 illustrates an embodiment using 2×2 MIMO spatial multiplexing. Fig. 3 shows the transmit apparatus 10 on the left-hand side with the plurality of transmit antennas 16. On the right-hand side the receiver apparatus 20 is shown with the plurality of receive antennas 26. In the present embodiment there are two transmit antennas 16 and two receive antennas 26 (2×2). Transmission is again organized in two subsequent time slots, namely $t_1$ and $t_2$. Fig. 3 depicts two time lines for each of the transmitter 10 and the receiver 20. As indicated in Fig. 3, the channel coefficients $h$ are indexed using the transmit and receive antenna indices. Moreover, the receive symbols $y$ are indexed with the time slot and the receive antenna they are received on. Fig. 3 further indicates that during the first time slot $t_1$, $\widetilde{s}_1$ and $\widetilde{s}_2$ are transmitted by the transmitter 10 on the first and the second transmit antennas. During the second time slot $\widetilde{s}_3$ is transmitted on the first transmit antenna and a phase shifted version of $\widetilde{s}_4$ is transmitted on the second transmit antenna. In this embodiment, the means for composing 12 or the means for transmitting 14 is operable to introduce a phase shift $\theta = ]0..2\pi[$ to the transmit symbol $\widetilde{s}_4$.

As presented in Fig. 3, during two consecutive time instants $t_1$ and $t_2$, channel coefficients $h_{11}$, $h_{21}$ $h_{12}$ and $h_{22}$ are assumed to be invariant, wherein the first index denotes the transmit antenna and the second index denotes the receive antenna. Hence, within an arbitrary even time instant $t_1$, the data symbols $s_1$ and $s_2$ are transmitted from both transmit antennas, respectively. Within the following odd time instant $t_2$, the data symbol $s_3$ and $s_4$ are transmitted. Similar to the above described STC scheme, the superimposed pilots $p_1$, $p_2$, $p_3$ and $p_4$ are assumed, which are additively transmitted with the data symbol. It holds,

$$\widetilde{s}_1 = \sqrt{E_d}\,s_1 + \sqrt{E_p}\,p_1 \ \text{ and } \ \widetilde{s}_2 = \sqrt{E_d}\,s_2 + \sqrt{E_p}\,p_2,$$

$$\widetilde{s}_3 = \sqrt{E_d}\,s_3 + \sqrt{E_p}\,p_3 \ \text{ and } \ \widetilde{s}_4 = \sqrt{E_d}\,s_4 + \sqrt{E_p}\,p_4.$$

Notice that a phase shift $e^{j\theta}$ is introduced for the odd time instant to assure invertibility of the channel matrix with the phase shift. Without the loss of generality, $\theta = \pi/2$ is assumed, generally $\theta = ]0...2\pi[$. With two temporally consecutive observations at the receiver 20, namely $y_{11}$ and $y_{21}$, $y_{12}$ and $y_{22}$, the 2×2 MIMO SMX scheme can be represented as

$$\mathbf{Y} = \begin{bmatrix} y_{11} & y_{12} \\ y_{21} & y_{22} \end{bmatrix} = \begin{bmatrix} \sqrt{E_d}s_1 + \sqrt{E_p}p_1 & \sqrt{E_d}s_2 + \sqrt{E_p}p_2 \\ \sqrt{E_d}s_3 + \sqrt{E_p}p_3 & (\sqrt{E_d}s_4 + \sqrt{E_p}p_4)e^{j\pi/2} \end{bmatrix} \cdot \begin{bmatrix} h_{11} & h_{12} \\ h_{21} & h_{22} \end{bmatrix} + \mathbf{N} \quad (2)$$

$$= \begin{bmatrix} \widetilde{s}_1 & \widetilde{s}_2 \\ \widetilde{s}_3 & \widetilde{s}_4 e^{j\pi/2} \end{bmatrix} \cdot \begin{bmatrix} h_{11} & h_{12} \\ h_{21} & h_{22} \end{bmatrix} + \mathbf{N},$$

where N represents a 2×2 AWGN matrix with variance $\sigma_{\text{Pre}}^2$. As shown in equations (1) and (2), the means for composing 12 is operable to compose the transmittal by superimposing the symbol comprising the information on the payload data, i.e. the symbol termed $s$, with the reference symbol, i.e. the symbol termed $p$, according to a predetermined weighting. The weighting is according to the transmit power or energy within the respective data or pilot symbol. In other words, the predetermined weighting corresponds to a payload transmit energy for the symbol comprising the information on the payload data, i.e. $s$, and the pilot transmit energy for the reference symbol, i.e. $p$.

In the following, it will be shown how the means for detecting 24 is operable for jointly estimating the payload data and the radio channel between the receiver 20 and the transmitter 10 based on the receive symbol $y$. The means for detecting 24 is operable to determine a hypothesis on the transmit symbol and the means for detecting 24 is operable to determine a channel estimate based on the hypothesis. Moreover, the means for detecting 24 is operable in an iteration to determine a sequence of hypothesis and channel estimates based on a sequence of receive symbols. The receive symbol is based on a plurality of transmit symbols being transmitted by a plurality of transmit antennas by the transmitter 10. In case of the second embodiment, the means for receiving 22 comprises the plurality of receive antennas 26 and is operable to receive a plurality of receive symbols using the plurality of receive antennas 26.

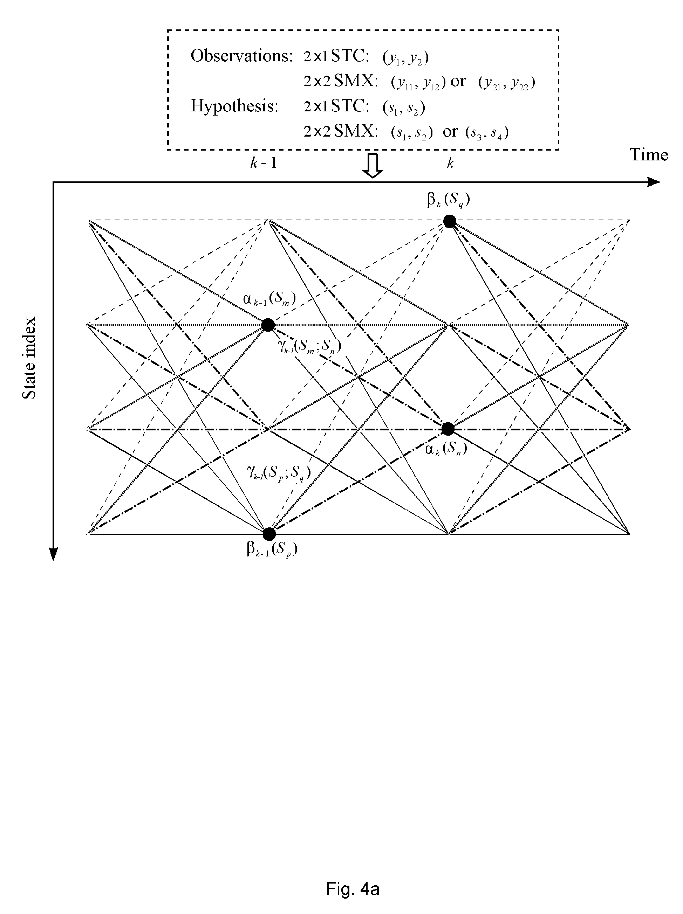

Fig. 4a introduces a trellis structure for the 2×1 MISO-STC or the 2×2 MIMO-SMX in the two embodiments. The trellis structure is a two-dimensional graph, which shows the time indices k towards the right and state indices towards the bottom of the figure. In each state multiple observations are made at the receiver 20. For the 2×1 STC, the two receive symbols $y_1$ and $y_2$ according to the above equation (1) are observed. In the second embodiment, i.e. the 2×2 SMX, during the first time slot the two symbols $y_{11}$ and $y_{21}$ are received on the first and second receive antennas 26. During the second time slot, the corresponding receive symbols $y_{12}$ and $y_{22}$ are received as receive symbols on the two receive antennas 26. Accordingly, different hypotheses can be assumed. In the 2×1 STC case, the two transmit symbols $s_1$ and $s_2$ are assumed. Correspondingly, for the 2×2 SMX case, the four transmit symbols $s_1$, $s_2$, $s_3$ and $s_4$ are assumed. Based on that assumption or hypothesis the channel can be estimated and correspondingly an estimate for the data can be determined.

Fig. 4a shows the trellis structure. Each node in the trellis is connected with $2^{MM_T}$ incoming and outgoing transitions, where $M$ denotes number of bits per modulated symbol, $M_T$ stands for the number of transmit antennas. By defining a memory $v$, the number of the states is determined within a certain time instant as $2^{v \cdot (MM_T)}$. The state index of a certain node in the trellis can indicate the transmitted bit pair during the defined memory $v$, called hypothesized bit pairs or hypotheses. In Fig. 4a a trellis structure is provided. According to the Maximum *A Posteriori* (MAP) algorithm, the forward and backward recursion are carried out by coefficient $\alpha$ and $\beta$, respectively. The different line types in Fig. 4a indicate different paths or transitions in the trellis diagram. The broken line paths all end in states at the top (first state), the dotted line paths all end in the second state, the dashed-dotted line paths all end in the third state, and the solid line paths all end in the fourth state. During the transition $k$-1 (between time instant $k$-1 and $k$), there are the available metric increments $\gamma_{k-1}$ for any connections between the nodes in the trellis.

In the forward recursion, as shown in the embodiment in Fig. 4a, the target node $S_n$ is forwardly connected with four dashed dotted branches. The corresponding originating nodes are denoted as $S_m$, establishing a set $M$ of indices. In forward recursion, it holds

$$\alpha_k(S_n) = \log\left\{ \sum_{m \in \mathcal{M}} \exp\left[ \alpha_{k-1}(S_m) + \gamma_{k-1}(S_m; S_n) \right] \right\}, \quad (3)$$

where set $M$ denotes the transitions forwardly connected with state $S_n$ at time instant $k$. In the embodiment shown in Fig. 4a $M = \{0,1,2,3\}$. Similarly, in the backward recursion, the target node $S_p$ is backwardly connected with four branches identified by different line styles. The corresponding nodes are denoted as $S_q$, establishing a indices set $Q$. And in backward recursion, it holds

$$\beta_{k-1}(S_p) = \log\left\{\sum_{q \in Q} \exp\left[\beta_k(S_q) + \gamma_{k-1}(S_p;S_q)\right]\right\} \qquad (4)$$

where set $Q$ denotes the transitions backwardly connected with state $S_p$ at time instant $k$-1. $Q = \{0,1,2,3\}$ in the embodiment depicted in Fig. 4a. As illustrated in Fig. 4a, there are two consecutive observations $y_1$ and $y_2$ at the Alamouti STC receiver, and there is a hypothesis pair $(s_1,s_2)$ referring to the corresponding state index, during the $(k$-1$)$-th transition between time instant $k$-1 and $k$. Furthermore, it is deployed

$$h_{1,k-i}^r \approx \frac{1}{\left|\widetilde{s}_{1,k-i-1}\right|^2 + \left|\widetilde{s}_{2,k-i-1}\right|^2}(\widetilde{s}_{1,k-i-1}^{\phantom{1}*} y_{2(k-i)-2} - \widetilde{s}_{2,k-i-1} y_{2(k-i)-1}), \qquad (5a)$$

$$h_{2,k-i}^r \approx \frac{1}{\left|\widetilde{s}_{1,k-i-1}\right|^2 + \left|\widetilde{s}_{2,k-i-1}\right|^2}(\widetilde{s}_{2,k-i-1}^{\phantom{2}*} y_{2(k-i)-2} + \widetilde{s}_{1,k-i-1} y_{2(k-i)-1}) \qquad (5b)$$

based on the hypothesis pair $(s_1,s_2)$ and the a priori superimposed pilot pair $(p_1,p_2)$ to reconstruct the channel pair $(h_1, h_2)$. The predicted channel coefficient $h_{1,k}^p$ and $h_{2,k}^p$ are

$$h_{1,k}^p = \frac{1}{v}\sum_{i=1}^{v} h_{1,k-i}^r \qquad (6a)$$

$$h_{2,k}^p = \frac{1}{v}\sum_{i=1}^{v} h_{2,k-i}^r. \qquad (6b)$$

For 2×1 MISO-STC, the metric increment $\gamma_{k-1}$ can be defined as

$$\gamma_{k-1} = -\frac{1}{2\sigma_{\text{Pre}}^2}\left(\left|y_{2k-2} - h_{1,k}^p \widetilde{s}_{1,k-1} - h_{2,k}^p \widetilde{s}_{2,k-1}\right|^2 + \left|y_{2k-1} + h_{1,k}^p \widetilde{s}_{2,k-1}^{\phantom{2}*} - h_{2,k}^p \widetilde{s}_{1,k-1}^{\phantom{1}*}\right|^2\right) \qquad (7)$$

$$= -\frac{1}{2\sigma_{\text{Pre}}^2}\left(\left|\widetilde{y}_{2k-2} - h_{1,k}^p \sqrt{E_d} s_{1,k-1} - h_{2,k}^p \sqrt{E_d} s_{2,k-1}\right|^2 + \left|\widetilde{y}_{2k-1} + h_{1,k}^p \sqrt{E_d} s_{2,k-1}^{\phantom{2}*} - h_{2,k}^p \sqrt{E_d} s_{1,k-1}^{\phantom{1}*}\right|^2\right),$$

with $\widetilde{y}_{2k-2} = y_{2k-2} - h_{1,k}^p \sqrt{E_p}\, p_{1,k-1} - h_{2,k}^p \sqrt{E_p}\, p_{2,k-1}$ and $\widetilde{y}_{2k-1} = y_{2k-1} + h_{1,k}^p \sqrt{E_p}\, p_{2,k-1}^{\,*} - h_{2,k}^p \sqrt{E_p}\, p_{1,k-1}^{\,*}$.

Notice that the *a priori* pilots can be successfully cancelled out, if the channel pair $h_{1,k}^p$ and $h_{2,k}^p$ is precisely predicted. Otherwise, this introduces a punishment to the metric increment $\gamma_{k-1}$, and helps the MAP algorithm to sort out the most likely survival trellis paths finally. Without loss of generality, an odd time instant from the view point of SMX detector is considered. Notice that the SMX code matrix $\begin{bmatrix} \widetilde{s}_1 & \widetilde{s}_2 \\ \widetilde{s}_3 & \widetilde{s}_4 e^{j\pi/2} \end{bmatrix}$ is always invertible. The channel matrix can be reconstructed by

$$\mathbf{H}_{k-i}^r = \begin{bmatrix} \widetilde{s}_1 & \widetilde{s}_2 \\ \widetilde{s}_3 & \widetilde{s}_4 e^{j\pi/2} \end{bmatrix}_{k-i}^{-1} \mathbf{Y}_{k-i} = \mathbf{H}_{k-i} + \begin{bmatrix} \widetilde{s}_1 & \widetilde{s}_2 \\ \widetilde{s}_3 & \widetilde{s}_4 e^{j\pi/2} \end{bmatrix}_{k-i}^{-1} \mathbf{N}. \qquad (8)$$

At the current time instant $k$, the metric increment $\gamma_{k-1}$ is,

$$\gamma_{k-1} = -\frac{1}{2\sigma_{\mathrm{Pre}}^2} \left\| \begin{bmatrix} y_{1,k-1} \\ y_{2,k-1} \end{bmatrix} - \mathbf{H}_k^p \begin{bmatrix} \widetilde{s}_{1,k-1} \\ \widetilde{s}_{2,k-1} \end{bmatrix} \right\|^2 \qquad (9)$$

$$= -\frac{1}{2\sigma_{\mathrm{Pre}}^2} \left\| \left( \begin{bmatrix} y_{1,k-1} \\ y_{2,k-1} \end{bmatrix} - \mathbf{H}_k^p \sqrt{E_p} \begin{bmatrix} p_{1,k-1} \\ p_{2,k-1} \end{bmatrix} \right) - \mathbf{H}_k^p \sqrt{E_d} \begin{bmatrix} s_{1,k-1} \\ s_{2,k-1} \end{bmatrix} \right\|^2.$$

As in the $2 \times 1$ MISO-STC scheme, the superimposed pilot helps to find out the precise predicted channel matrix $\mathbf{H}_k^p$, and punish the imprecise ones, by distorting the metric increment $\gamma_{k-1}$. $\sigma_{\mathrm{Pre}}^2$ represents the noise power.

Hence, the Log-Likelihood-Ratio (LLR) *of j*-th bit in *i*-th stream can be obtained by

$$\mathcal{L}\left[b_{i,k-1}^{(j)}\right] = \frac{\log\left\{ \sum_{m,n \in \mathcal{A}_{i,j}^{(1)}} \exp\left[\alpha_{k-1}(S_m) + \gamma_{k-1}(S_m; S_n) + \beta_k(S_n)\right] \right\}}{\log\left\{ \sum_{m,n \in \mathcal{A}_{i,j}^{(0)}} \exp\left[\alpha_{k-1}(S_m) + \gamma_{k-1}(S_m; S_n) + \beta_k(S_n)\right] \right\}} \qquad (10)$$

where sets $\mathcal{A}_{i,j}^{(1)}$ and $\mathcal{A}_{i,j}^{(0)}$ denote *j*-th bit $b_{i,k-1}^{(j)}$ of symbol $s_{i,k-1}$ is 1 and 0 during time instant $k$, respectively, with stream index $i = 1, 2$.

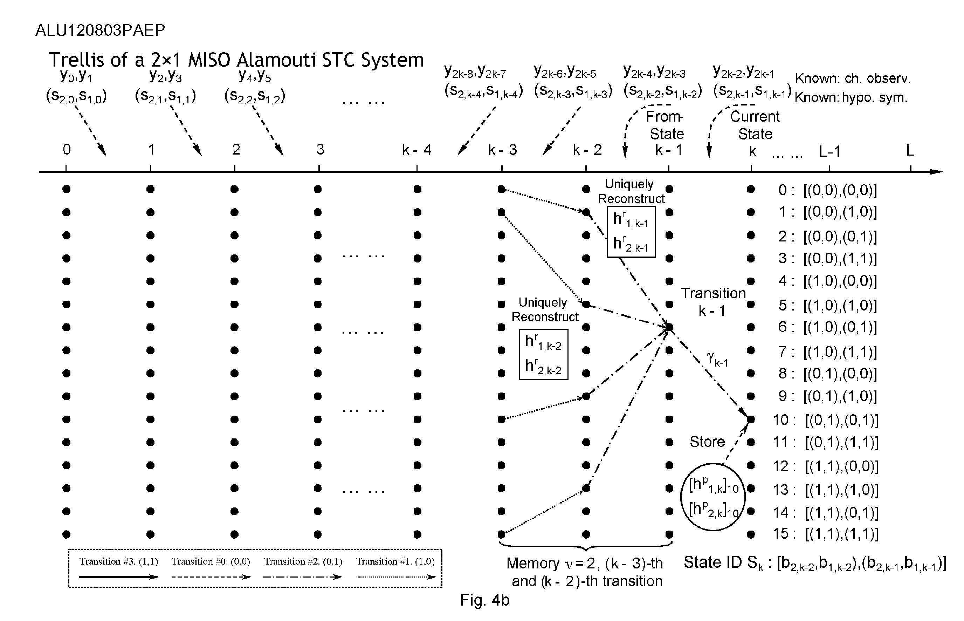

Fig. 4b shows details of a trellis structure for a $2 \times 1$ space-time scheme in an embodiment. Fig. 4b depicts a scenario for computing the branch metric $\gamma_{k-1}$ between From-state and Current-state. Fig. 4b demonstrates the one-to-one correspondence of state identification $S_k$ and the hypothesized bit pair $[(b_{2,k-2}, b_{1,k-2}), (b_{2,k-1}, b_{1,k-1})]$ and the channel reconstruction within the memory $v = 2$. Fig. 4b illustrates a block of $0...L$ subsequent STC transmission slots, with the corresponding receive symbols $y_0$, $y_1$ to $y_{2k-2}$, $y_{2k-1}$ until slot $k$. Fig. 4b further shows the transmit data symbols at the corresponding STC slots, namely $(s_{2,0}, s_{1,0})$ to $(s_{2,k-1}, s_{1,k-1})$. In line with the above equation (1) the noisy channel estimates can be obtained as

$$\begin{bmatrix} h_1 \\ h_2 \end{bmatrix} \approx \frac{1}{\left|\widetilde{s}_1\right|^2 + \left|\widetilde{s}_2\right|^2} \begin{bmatrix} \widetilde{s}_1^* & -\widetilde{s}_2 \\ \widetilde{s}_2^* & \widetilde{s}_1 \end{bmatrix} \cdot \begin{bmatrix} y_1 \\ y_2 \end{bmatrix}. \qquad (11)$$

Fig. 2 as well as equations (1) and (11) are the general model of STC transmitter during two consecutive time instants $t_1$ and $t_2$. Index k is still not considered yet.

Fig. 4b illustrates the transitions between the different states. There are 16 states in Fig. 4b, which are defined by the 16 combinations of $[(b_{2,k-2}, b_{1,k-2}), (b_{2,k-1}, b_{1,k-1})]$. The transitions depend on the respective combination of $(b_{2,k-1}, b_{1,k-1})$, which determines the following state. Depending on said combination Fig. 4b illustrates different transitions with different arrows, in line with the legend underneath. Hence, within the memory $v = 2$, during the $(k - 3)$-th and the $(k - 2)$-th transition, the hypothesized bit/symbol combination can be uniquely determined by state index of From-state.

Within transition $k$-1, vector $\mathbf{h}_{1,k}^p$ and $\mathbf{h}_{2,k}^p$ will be predicted for each node. A shown in Fig. 4b, there are totally $N_{tr}N_{st} = 2^{M \cdot MT})$ possible transitions, each of which corresponds to a prediction pair for $h_{1,k}^p$ and $h_{2,k}^p$. The most likely $N_{st} = 2^{v(M \cdot MT)}$ prediction pairs will be stored in $\mathbf{h}_{1,k}^p$ and $\mathbf{h}_{2,k}^p$.

Considering the system equations (1) and (11) within transition $k - 2$, it holds

$$h_{1,k-1}^r \approx \frac{1}{\left|\widetilde{s}_{1,k-2}\right|^2 + \left|\widetilde{s}_{2,k-2}\right|^2} (\widetilde{s}_{1,k-2}^* y_{2k-4} - \widetilde{s}_{2,k-2} y_{2k-3}), \qquad (12a)$$

$$h_{2,k-1}^r \approx \frac{1}{\left|\widetilde{s}_{1,k-2}\right|^2 + \left|\widetilde{s}_{2,k-2}\right|^2} (\widetilde{s}_{2,k-2}^* y_{2k-4} + \widetilde{s}_{1,k-2} y_{2k-3}), \qquad (12b)$$

with $s_{1,k-2} = 2b_{1,k-2} - 1$ and $s_{2,k-2} = 2b_{2,k-2} - 1$, considering BPSK modulation. The index $k$-2 of signal symbol $s_{1,k-2}$ and $s_{2,k-2}$ stands for the **transition index,** corresponding to the trellis diagram shown in Fig. 4b. The indices $2k$-4 and $2k$-3 of receive symbols $y_{2k-4}$ and $y_{2k-3}$ stand for **time indices.** According to Fig. 4b, it can be noticed that during time instant $2k - 4$, $s_{1,k-2}$ and $s_{2,k-2}$ are transmitted, during time instant $2k - 3$, the redundancy $-s_{2,k-2}^*$ and $s_{1,k-2}^*$ are delivered.

Similarly, for time instant $k - 2$ within transition $k - 3$, the channel coefficient $h_{1,k-2}^r$ and $h_{2,k-2}^r$ can be reconstructed as

$$h_{1,k-2}^r \approx \frac{1}{\left|\widetilde{s}_{1,k-3}\right|^2 + \left|\widetilde{s}_{2,k-3}\right|^2} (\widetilde{s}_{1,k-3}^* y_{2k-6} - \widetilde{s}_{2,k-3} y_{2k-5}), \qquad (13a)$$

$$h_{2,k-2}^{r} \approx \frac{1}{\left|\widetilde{s}_{1,k-3}\right|^{2} + \left|\widetilde{s}_{2,k-3}\right|^{2}} \left(\widetilde{s}_{2,k-3}^{*} y_{2k-6} + \widetilde{s}_{1,k-3} y_{2k-5}\right). \qquad (13b)$$

The following equations (14a) and (14b) extend equations (12a) to (13b) in a general way for shift $i$ within the memory $v$, with $i \leq v$. The predicted channel coefficient $h_{1,k}^{p}$ and $h_{2,k}^{p}$ are

$$h_{1,k}^{p} = \frac{1}{v} \sum_{i=1}^{v} h_{1,k-i}^{r} = \frac{1}{2} h_{1,k-1}^{r} + \frac{1}{2} h_{1,k-2}^{r}, \qquad (14a)$$

$$h_{2,k}^{p} = \frac{1}{v} \sum_{i=1}^{v} h_{2,k-i}^{r} = \frac{1}{2} h_{2,k-1}^{r} + \frac{1}{2} h_{2,k-2}^{r}. \qquad (14b)$$

For $2 \times 1$ MISO STC system, the metric increment $\gamma_{k-1}$ can be defined as

$$\gamma_{k-1} = -\frac{1}{2\sigma_{\mathrm{Pre}}^{2}} \left( \left| y_{2k-2} - h_{1,k}^{p} \widetilde{s}_{1,k-1} - h_{2,k}^{p} \widetilde{s}_{2,k-1} \right|^{2} + \left| y_{2k-1} + h_{1,k}^{p} \widetilde{s}_{2,k-1}^{*} - h_{2,k}^{p} \widetilde{s}_{1,k-1}^{*} \right|^{2} \right) \qquad (15)$$

$$= -\frac{1}{2\sigma_{\mathrm{Pre}}^{2}} \left( \left| \widetilde{y}_{2k-2} - h_{1,k}^{p} \sqrt{E_{d}} s_{1,k-1} - h_{2,k}^{p} \sqrt{E_{d}} s_{2,k-1} \right|^{2} + \left| \widetilde{y}_{2k-1} + h_{1,k}^{p} \sqrt{E_{d}} s_{2,k-1}^{*} - h_{2,k}^{p} \sqrt{E_{d}} s_{1,k-1}^{*} \right|^{2} \right),$$

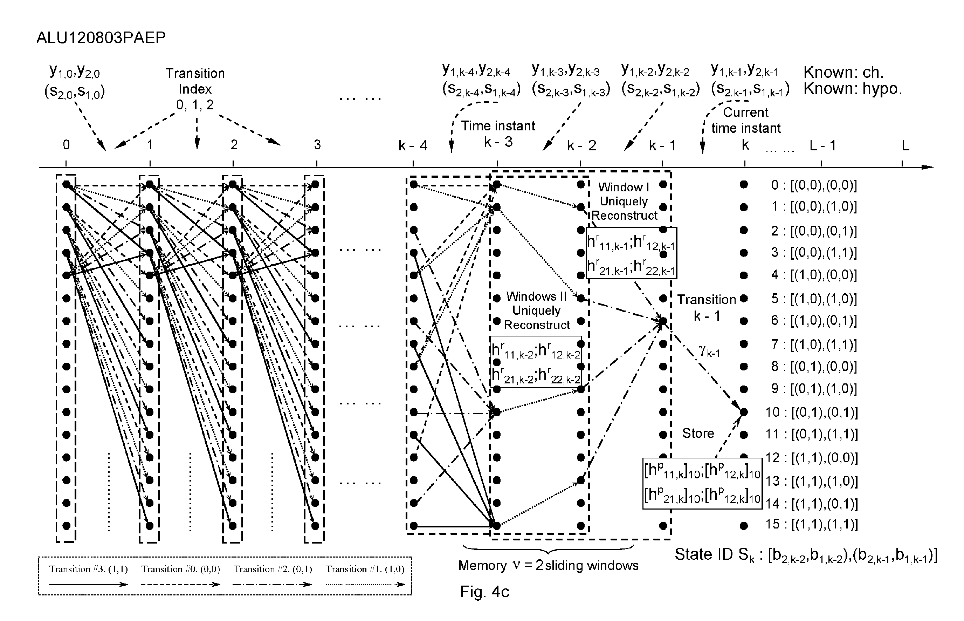

$\widetilde{y}_{2k-2} = y_{2k-2} - h_{1,k}^{p} \sqrt{E_{p}} p_{1,k-1} - h_{2,k}^{p} \sqrt{E_{p}} p_{2,k-1}$ where and $\widetilde{y}_{2k-1} = y_{2k-1} + h_{1,k}^{p} \sqrt{E_{p}} p_{2,k-1}^{*} - h_{2,k}^{p} \sqrt{E_{p}} p_{1,k-1}^{*}$. Fig. 4c shows details of a trellis structure for a $2 \times 2$ MIMO spatial multiplexing system, similar to what was explained with respect to Fig. 4b. Fig. 4c depicts a scenario for computing the branch metric $\gamma_{k-1}$ between time instant $k$-1 and $k$, namely during transition $k$-1.

Again, Fig. 4c demonstrates the one-to-one correspondence of the state identification $S_{k}$ and the hypothesized bit pair $[(b_{2,k-2}, b_{1,k-2}),(b_{2,k-1}b_{1,k-1})]$ and the channel reconstruction within the memory $v = 2$, with respect to two sliding windows I and II, which are shown in Fig. 4c for a memory depth of $v = 2$, wherein window I extends from time instant $k$ - 3 to $k$-1, window II extends from time instant $k$ - 4 to $k$ - 2. Fig. 4c illustrates the different transitions on the left hand side. For overview purposes on the transitions starting form the first four nodes (states) from the top are shown. As it was explained for Fig. 4c in each node 4 transitions originate.

For the general MIMO case, i.e. extension for $M_{T} \times M_{R}$ MIMO, with $M_{T} = M_{R}$, space-time precoding can be considered, yielding the MIMO system equation as

$$\mathbf{Y}_{k} = \mathbf{H}_{k}(\underbrace{\mathbf{W}_{k} \circ \widetilde{\mathbf{S}}_{k}}_{\mathbf{D}_{k}}) + \mathbf{N}_{k} = \mathbf{H}_{k} \left( \begin{bmatrix} 1 & 1 & \cdots & 1 \\ 1 & e^{j\theta} & \ddots & \vdots \\ \vdots & \ddots & \ddots & 1 \\ 1 & \cdots & 1 & e^{j\theta} \end{bmatrix} \circ \begin{bmatrix} \widetilde{s}_{1,k} & \widetilde{s}_{1,k+1} & \cdots & \widetilde{s}_{1,k+M_{T}-1} \\ \widetilde{s}_{2,k} & \widetilde{s}_{2,k+1} & \cdots & \widetilde{s}_{2,k+M_{T}-1} \\ \vdots & \vdots & \vdots & \vdots \\ \widetilde{s}_{M_{T},k} & \widetilde{s}_{M_{T},k+1} & \cdots & \widetilde{s}_{M_{T},k+M_{T}-1} \end{bmatrix} \right) + \mathbf{N}_{k},$$

$$(16)$$

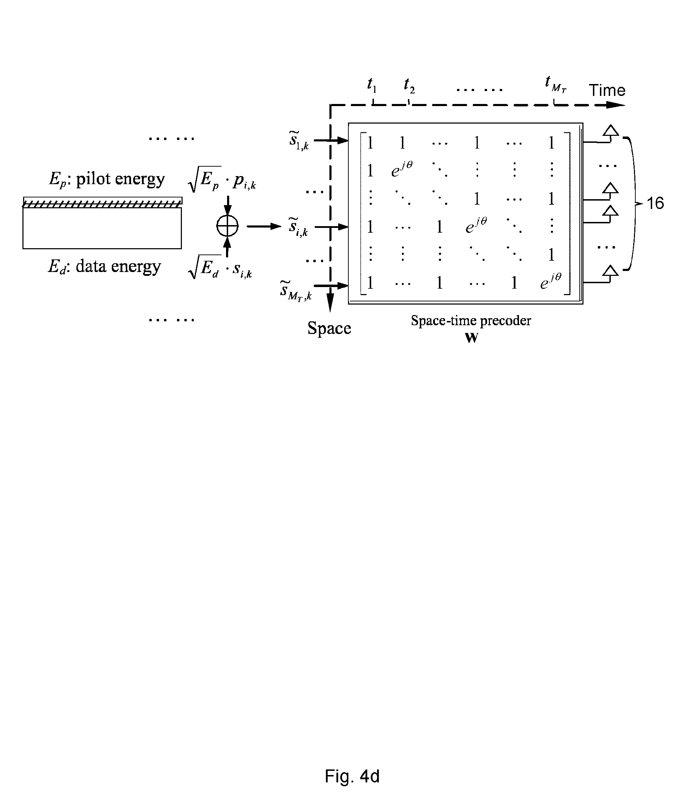

where operator (∘) denotes Hadamard product, namely element-wise matrix multiplication. Fig. 4d shows details of a MIMO spatial multiplexing transmitter, i.e. a MIMO-SMX transmitter structure. The transmit symbols are composed on the left hand side in line with the above. The space-time precoder is represented as a square matrix using $M_T$ transmit antennas. Fig. 1 illustrates the MIMO-SMX transmitter. The MIMO channel matrix $H_k$ can be assumed time-invariant, during the time instant $[gM_T + 1, (g + 1)M_T]$ with a non-negative integer $g$. Notice that the matrix

$$\mathbf{D}_{k-j-(M_T-1)} = \mathbf{W}_{k-j-(M_T-1)} \circ \widetilde{\mathbf{S}}_{k-j-(M_T-1)} = \mathbf{W}_{k-j-(M_T-1)} \circ \begin{bmatrix} \widetilde{S}_{1,k-j-(M_T-1)} & \widetilde{S}_{1,k-j-(M_T-2)} & \cdots & \widetilde{S}_{1,k-j} \\ \widetilde{S}_{2,k-j-(M_T-1)} & \widetilde{S}_{2,k-j-(M_T-2)} & \cdots & \widetilde{S}_{2,k-j} \\ \vdots & \vdots & \vdots & \vdots \\ \widetilde{S}_{M_T,k-j-(M_T-1)} & \widetilde{S}_{M_T,k-j-(M_T-2)} & \cdots & \widetilde{S}_{M_T,k-j} \end{bmatrix}$$

$$(17)$$

is always invertible, where $W_{k-j-(M_T-1)}$ denotes the space-time precoding matrix, deployed for time instant $k$-$j$-$(M_T-1)$ to time instant $k$-$j$. The channel matrix $\mathbf{H}_k^p$ of time instant k can be predicted by

$$\mathbf{H}_k^p = \frac{1}{v} \sum_{j=2}^{v+1} \mathbf{Y}_{k-j-(M_T-1)} \mathbf{D}_{k-j-(M_T-1)}^{-1}, \qquad (18)$$

$Y_{k-j-(M_T-1)}$ and $D_{k-j-(M_T-1)}$ can be obtained within the sliding windows. At time instant k , the metric increment $\gamma_{k-1}$ can be computed by

$$\gamma_{k-1} = -\frac{1}{2\sigma_{\text{Pre}}^2} \left\| \underbrace{\mathbf{y}_{k-1} - \mathbf{H}_k^p (\mathbf{w}_{k-1} \circ \sqrt{E_p} \mathbf{p}_{k-1})}_{\widetilde{\mathbf{y}}_{k-1}} - \mathbf{H}_k^p (\mathbf{w}_{k-1} \circ \sqrt{E_d} \mathbf{s}_{k-1}) \right\|^2 + \frac{1}{2} \sum_{i=1}^{M_T} \mathcal{L}_{a,i,k-1} s_{i,k-1}, \quad (19)$$

where $w_{k-1}$ denotes the space-time precoding vector, corresponding to transition $k$-1, and $L_{a,i,k-1}$ stands for *a priori* knowledge available for symbol $s_{i,k-1}$. In the above 2×1 STC equation (7), *a priori* knowledge for the 2 × 1 STC case can be taken into account as

$$\gamma_{k-1} = -\frac{1}{2\sigma_{\text{Pre}}^2} \left( \left| y_{2k-2} - h_{1,k}^p \widetilde{S}_{1,k-1} - h_{2,k}^p \widetilde{S}_{2,k-1} \right|^2 + \left| y_{2k-1} + h_{1,k}^p \widetilde{S}_{2,k-1}^* - h_{2,k}^p \widetilde{S}_{1,k-1}^* \right|^2 \right) + \frac{1}{2} \sum_{i=1}^{2} \mathcal{L}_{a,i,k-1} s_{i,k-1}.$$

$$(20)$$

In the following multiple embodiments will be considered, which use two, three or four 2 × 2 MIMO-SMX blocks, in order to yield 4 × 4 , 6 × 6 or 8×8 MIMO system, if a multiband transceiver is available. These embodiments may come at the cost of additional spectrum resources. The extension for MIMO described above does not involve additional spectrum resource, but it may come at the cost of computational complexity.

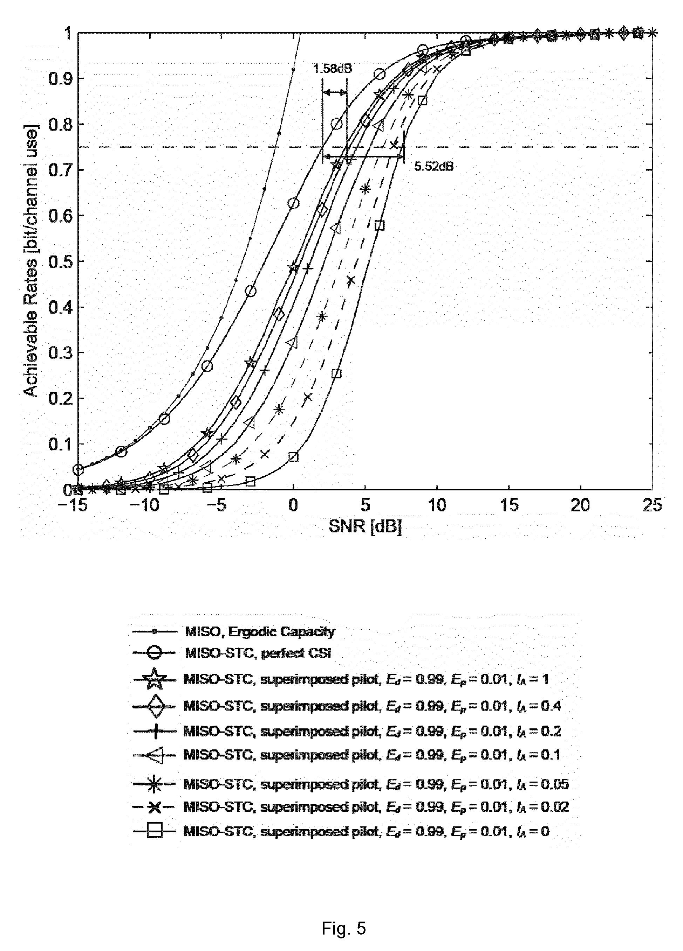

Fig. 5 shows simulation results on achievable rate versus the Signal-to-Noise Ratio (SNR) of the 2×1 MISO-STC with a superimposed pilot energy of 1 %. The memory depth $v$ was set to 2, $T_s f_D$ was set to 0.01 (symbol duration $T_s$ time Doppler shift $f_D$) and Binary Phase Shift Keying (BPSK) was assumed as modulation scheme. The respective view graphs show the achievable data rates for varying $I_A = 0...1$, which represents *a priori* information on a data symbol.

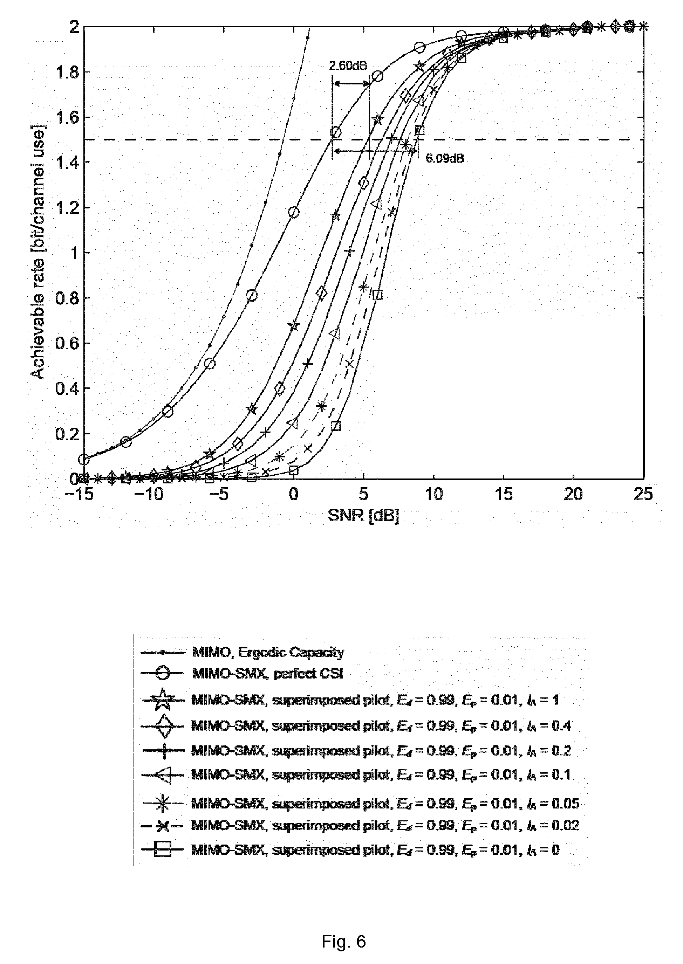

Fig. 6 illustrates the corresponding simulation results of the achievable rates versus the SNR for the 2x2 MIMO-SMX case. Again, superimposed pilots with 1 % of the energy of the data symbols are assumed, the memory depth $v = 2$, $T_s f_D$ was set to 0.01 and BPSK was assumed. Figs. 5 and 6 show the achievable data rates versus SNR curves and are presented for both the $2\times1$ MISO-STC and 2x2 MIMO-SMX schemes, with different additional *a priori* information on the data symbol, quantified by $I_A$. Firstly, the peak achievable rate can be approached, namely a loss of rate cannot be seen, due to, for example, the discrete pilots occupying the time and frequency resource. Secondly, it can be noticed that the MISO-STC or the MIMO-SMX performance with perfect Channel State Information (CSI), can be approached with increased $I_A$. This indicates that the algorithm can be integrated into an iterative receiver and can possibly yield the corresponding performance.

Finally, it can be noticed from Figs. 5 and 6 that the $2\times1$ MISO-STC scheme is about 1.58dB away from the upper bound and the 2x2 MIMO-SMX scheme is 2.6dB away from its upper bound, when focus is on a transmission with code rate of 3/4. The 1dB difference can be attributed to the SMX code matrix in equation (8) which is absolutely invertible, nevertheless only partially unitary. Therefore, the channel prediction in equation (8) may suffer from high channel estimation errors.

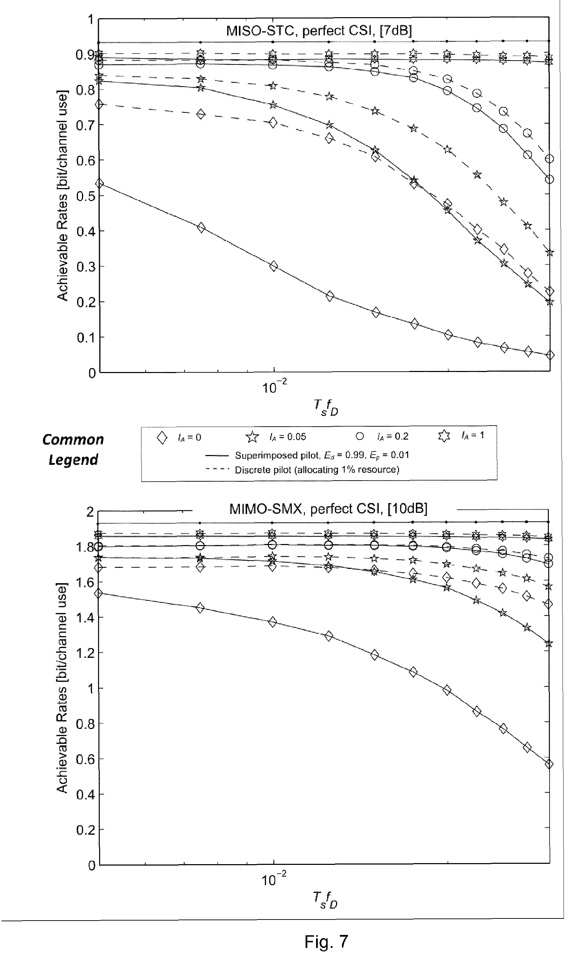

Fig. 7 illustrates further simulation results of the achievable rates versus the fading statistics of the channel, i.e. versus $T_s f_D$. Fig. 7 shows the simulation results for the $2\times1$ MISO-STC at the top and for the $2\times2$ MIMO-SMX at the bottom. Again, superimposed pilot energy of 1% is assumed, the memory depth $v = 2$ for BPSK. Fig. 7 shows a comparison between discrete pilot and superimposed pilots. In the simulation both of which equivalently occupy 1 % of the overall transmit power and both of which deploy the same trellis detection algorithm. The factor $T_s f_D$ represents the fading rate of the wireless channel, i.e. the symbol duration $T_s$ times the Doppler shift $f_D$. Generally, Fig. 7 shows that the superimposed pilot will be less sensitive, if the fading rate $T_s f_D$ increases. Additionally, for an iterative receiver, the superimposed pilot based detection algorithm may consequently converge to its optimum more quickly than discrete pilot-based solutions.

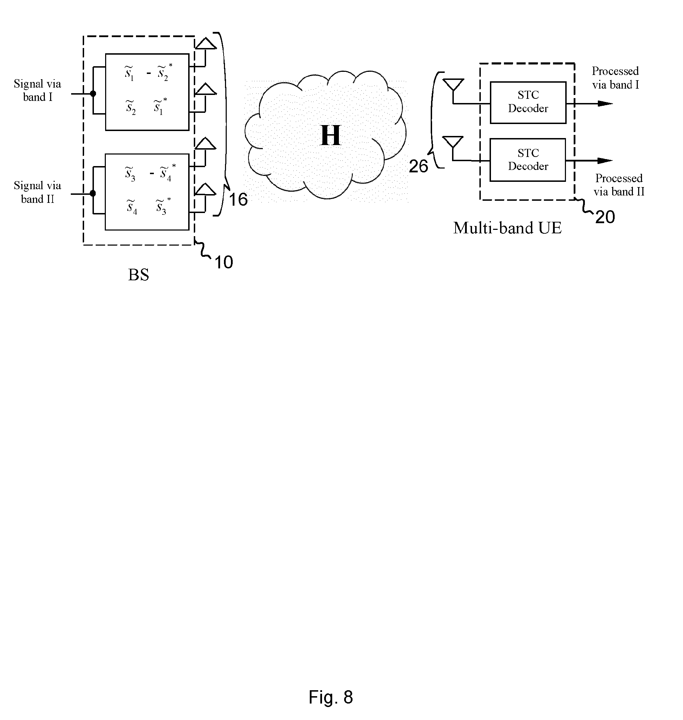

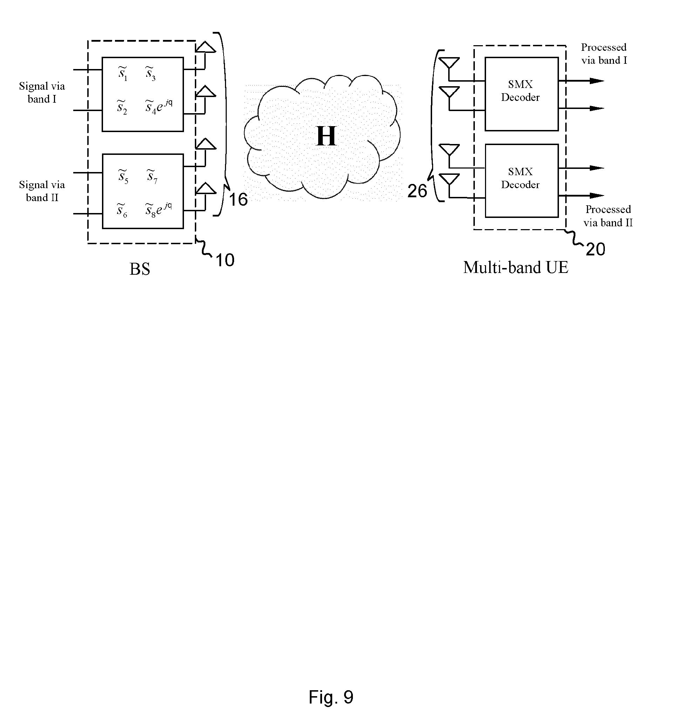

Fig. 8 shows an extension to a $4\times2$ MIMO-STC with a multiband mobile transceiver, i.e. a multiband receiver 20 on the right-hand side. The multiband receiver 20 is implemented as a multiband User Equipment (UE). As indicated in Fig. 8, similar signal processing is applied as in Fig. 2, however, in two different bands, "band I" and "band II". Correspondingly, the multiband UE 20 uses two STC decoders for decoding the signals. Another extension to a $4\times4$ MIMO-SMX with a multiband UE is shown in Fig. 9. Fig. 9 shows the multiband base station as the transmitter 10 transmitting signals through the MIMO radio channel H to the multiband UE 20. In the embodiment shown in Fig. 9, the multiband UE 20 utilizes four transmit antennas 26. Correspondingly, the base station or the transmitter 10 uses four transmit antennas 16. Figs. 8 and 9 demonstrate an extension of the fundamental embodiments of a $2\times1$ MISO-STC and a $2\times2$ MIMO-SMX to MIMO-STC and MIMO-SMX schemes, respectively, if a multiband UE is available. Especially, the computational complexity is proportional to the number of introduced STC or SMX processing blocks. In the normal case, the complexity may increase exponentially with additional MIMO transmit and receive antennas 16 and 26, respectively.

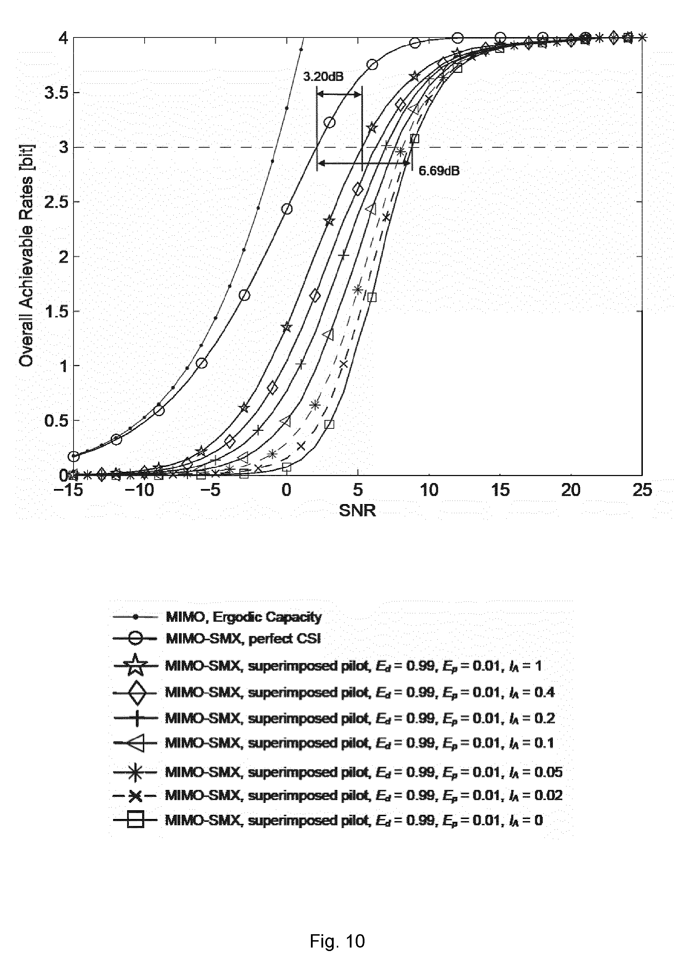

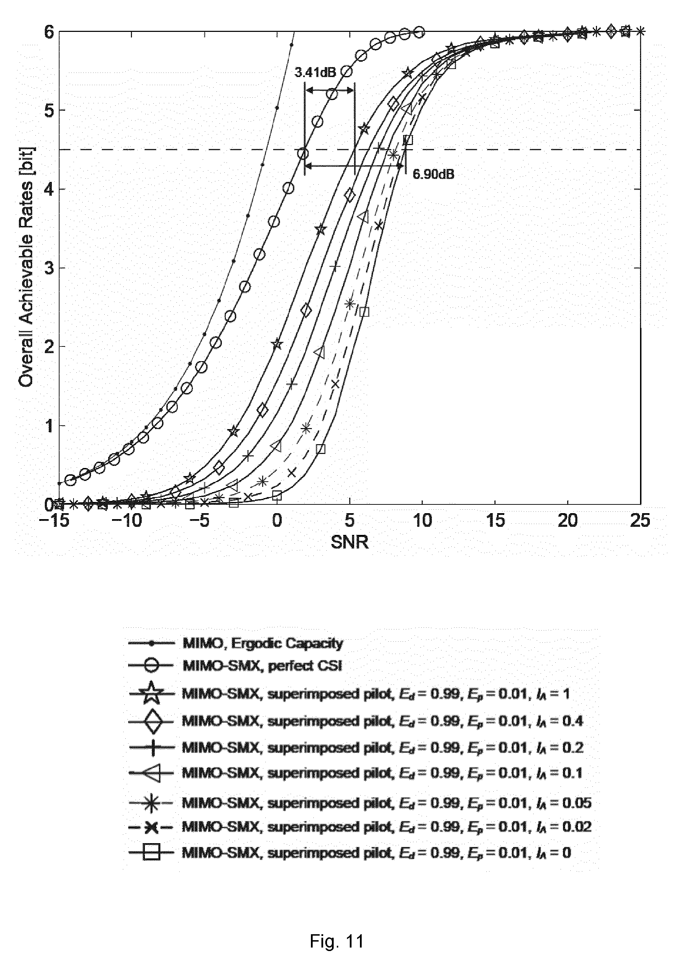

Fig. 10 depicts further simulation results on the achievable rates versus SNR. In Fig. 10 a $4\times4$ MIMO-SMX MIMO scheme was simulated with superimposed pilot energy of 1 %, memory depth $v = 2$, $T_s f_D = 0.01$ and BPSK. Fig. 11 depicts the simulation results for the achievable rates versus SNR if a $6\times6$ MIMO-SMX scheme is assumed for a superimposed pilot energy of 1 %, memory depth $v = 2$, $T_s f_D = 0.01$, and BPSK. Fig. 10 shows the simulation results for the scheme illustrated in Fig. 9. Comparing Fig. 9 to Fig. 6, the $4\times4$ MIMO-SMX is now 3.2dB away from its upper bound, namely additional 0.6dB loss is caused by the non-joint processing on the basis of full receive antennas. It is a tradeoff between the performance loss due to distributed processing, however, high absolute data rates and low complexity. Fig. 11 shows simulation results for the $6\times6$ MIMO-SMX. As expected, further 0.2dB loss can be observed due to distributed processing. In return, the peak overall achievable rate is 6 bit.

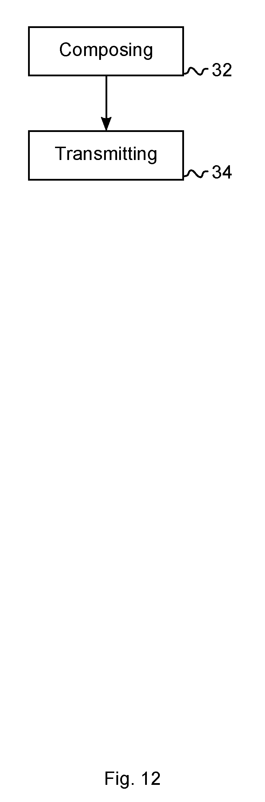

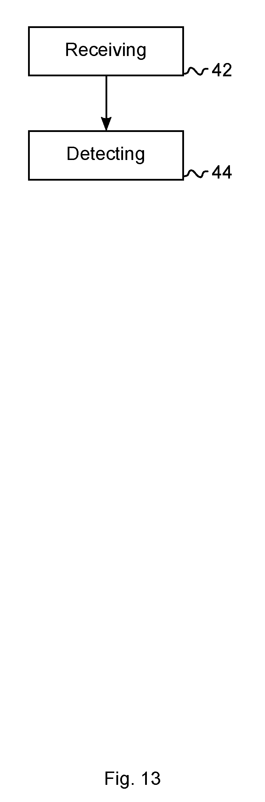

Fig. 12 shows a block diagram of an embodiment of a method for a wireless transmitter. The method comprises a step of composing 32 a transmit symbol, the transmit symbol being composed of a symbol comprising information on payload data and a reference symbol. The method further comprises a step of transmitting 34 the transmit symbol. Fig. 13 illustrates a block diagram of an embodiment of a method for a wireless receiver. The method comprises a step of receiving 42 a receive symbol, the receive symbol being based on a transmit symbol being transmitted by a transmitter and being composed of a symbol comprising information on payload data and a reference symbol. The method further comprises a step of detecting 44 for the payload data based on the receive symbol.

Further embodiments provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for composing", "means for transmitting", "means for receiving", "means for detecting" etc., may be provided through the use of dedicated hardware, such as "a composer", "a transmitter", "a receiver", "a detector", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. An apparatus (10) for a wireless transmitter, comprising
   means for composing (12) a transmit symbol, the transmit symbol being composed of a symbol comprising information on payload data and a reference symbol; and
   means for transmitting (14) the transmit symbol.

2. The apparatus (10) of claim 1, further comprising a plurality of transmit antennas (16), wherein the means for composing (12) is operable to compose a plurality of transmit symbols being composed of symbols comprising information on payload data and reference symbols for the plurality of transmit antennas (16), and wherein the means for transmitting (14) is operable to transmit the plurality of transmit symbols on the plurality of transmit antennas (16) simultaneously.

3. The apparatus (10) of claim 1, wherein the means for composing (12) is operable to compose the transmit symbol by superimposing the symbol comprising the information on the payload data with the reference symbol according to a predetermined weighting.

4. The apparatus (10) of claim 3, wherein the predetermined weighting corresponds to a payload transmit energy for the symbol comprising the information on the payload data and a pilot transmit energy for the reference symbol.

5. The apparatus (10) of claim 1, wherein the means for composing (12) and/or the means for transmitting (14) is operable to introduce a phase shift to a transmit symbol.

6. An apparatus (20) for a wireless receiver, comprising
means for receiving (22) a receive symbol, the receive symbol being based on a transmit symbol being transmitted by a transmitter and being composed of a symbol comprising information on payload data and a reference symbol; and means for detecting (24) the payload data based on the receive symbol.

7. The apparatus of claim 6, wherein the means for detecting (24) is operable for jointly estimating the payload data and a radio channel between the receiver and the transmitter based on the received symbol.

8. The apparatus (20) of claim 7, wherein the means for detecting (24) is operable to determine a hypothesis on the transmit symbol and wherein the means for detecting (24) is operable to determine a channel estimate based on the hypothesis.

9. The apparatus (20) of claim 8, wherein the means for detecting (24) is operable in an iteration to determine a sequence of hypothesis and channel estimates based on a sequence of receive symbols.

10. The apparatus (20) of claim 6, wherein the receive symbol is based on a plurality of transmit symbols being transmitted by a plurality of transmit antennas by the transmitter.

11. The apparatus (20) of claim 6, wherein the means for receiving (22) comprises a plurality of receive antennas (26) and is operable to receive a plurality of receive symbols using the plurality of receive antennas (26).

12. The apparatus of claim 6, wherein the means for detecting (24) is operable to determine a reliability measure for one or more transmit symbols based on one or more receive symbols and to detect the payload data based on a maximum likelihood of the one or more transmit symbols in consequence of the one or more receive symbols.

13. A method for a wireless transmitter, comprising
composing (32) a transmit symbol, the transmit symbol being composed of a symbol comprising information on payload data and a reference symbol; and transmitting (34) the transmit symbol.

14. A method for a wireless receiver, comprising
receiving (42) a receive symbol, the receive symbol being based on a transmit symbol being transmitted by a transmitter and being composed of a symbol comprising information on payload data and a reference symbol; and detecting (44) the payload data based on the receive symbol.

15. A computer program having a program code for performing one of the methods of claims 13 or 14, when the computer program is executed on a computer or processor.

**Amended claims in accordance with Rule 137(2) EPC.**

1. An apparatus (10) for a wireless transmitter, comprising
means for composing (12) a transmit symbol, the transmit symbol being composed by superimposing a symbol comprising information on payload data and a reference symbol; and
means for transmitting (14) the transmit symbol, the apparatus (10) further comprising a plurality of transmit antennas (16), wherein the means for composing (12) is operable to compose a plurality of transmit symbols by superimposing symbols comprising information on payload data and reference symbols for the plurality of transmit antennas (16), and wherein the means for transmitting (14) is operable to transmit the plurality of transmit symbols on the plurality of transmit antennas (16) simultaneously, wherein the means for composing (12) and/or the means for transmitting (14) is operable to introduce a phase shift to a transmit symbol.

2. The apparatus (10) of claim 1, wherein the means for composing (12) is operable to compose the transmit symbol by superimposing the symbol comprising the information on the payload data with the reference symbol according to a predetermined weighting.

3. The apparatus (10) of claim 2, wherein the predetermined weighting corresponds to a payload transmit energy for the symbol comprising the information on the payload data and a pilot transmit energy for the reference symbol.

4. An apparatus (20) for a wireless receiver, comprising

means for receiving (22) a receive symbol, the receive symbol being based on a transmit symbol being transmitted by a transmitter and being superimposed of a symbol comprising information on payload data and a reference symbol; and means for detecting (24) the payload data based on the receive symbol, wherein the means for detecting (24) is operable for jointly estimating the payload data and a radio channel between the receiver and the transmitter based on the received symbol.

**5.** The apparatus (20) of claim 4, wherein the means for detecting (24) is operable to determine a hypothesis on the transmit symbol and wherein the means for detecting (24) is operable to determine a channel estimate based on the hypothesis.

**6.** The apparatus (20) of claim 5, wherein the means for detecting (24) is operable in an iteration to determine a sequence of hypothesis and channel estimates based on a sequence of receive symbols.

**7.** The apparatus (20) of claim 4, wherein the receive symbol is based on a plurality of transmit symbols being transmitted by a plurality of transmit antennas by the transmitter.

**8.** The apparatus (20) of claim 4, wherein the means for receiving (22) comprises a plurality of receive antennas (26) and is operable to receive a plurality of receive symbols using the plurality of receive antennas (26).

**9.** The apparatus of claim 4, wherein the means for detecting (24) is operable to determine a reliability measure for one or more transmit symbols based on one or more receive symbols and to detect the payload data based on a maximum likelihood of the one or more transmit symbols in consequence of the one or more receive symbols.

**10.** A method for a wireless transmitter, comprising
composing (32) a plurality of transmit symbols by superimposing symbols comprising information on payload data and reference symbols for a plurality of transmit antennas (16); and
transmitting (34) the plurality of transmit symbols on the plurality of transmit antennas (16) simultaneously, wherein the composing (32) and/or the transmitting (34) introduces a phase shift to a transmit symbol.

**11.** A method for a wireless receiver, comprising
receiving (42) a receive symbol, the receive symbol being based on a transmit symbol being transmitted by a transmitter and being superimposed of a symbol comprising information on payload data and a reference symbol; and detecting (44) the payload data based on the receive symbol by jointly estimating the payload data and a radio channel between the receiver and the transmitter based on the received symbol.

**12.** A computer program having a program code for performing one of the methods of claims 13 or 14, when the computer program is executed on a computer or processor.

Fig. 1

Fig. 2

Fig. 3

Fig. 4a

## Trellis of a 2×1 MISO Alamouti STC System

$y_0, y_1$    $y_2, y_3$    $y_4, y_5$      $y_{2k-8}, y_{2k-7}$   $y_{2k-6}, y_{2k-5}$   $y_{2k-4}, y_{2k-3}$   $y_{2k-2}, y_{2k-1}$   Known: ch. observ.

$(s_{2,0}, s_{1,0})$   $(s_{2,1}, s_{1,1})$   $(s_{2,2}, s_{1,2})$   ... ...   $(s_{2,k-4}, s_{1,k-4})$   $(s_{2,k-3}, s_{1,k-3})$   $(s_{2,k-2}, s_{1,k-2})$   $(s_{2,k-1}, s_{1,k-1})$   Known: hypo. sym.

From-State   Current State

0   1   2   3   k - 4   k - 3   k - 2   k - 1   k   ... ...   L-1     L

Uniquely Reconstruct

$h^r_{1,k-1}$

$h^r_{2,k-1}$

Uniquely Reconstruct

$h^r_{1,k-2}$

$h^r_{2,k-2}$

Transition k - 1

$\gamma_{k-1}$

Store

$[h^p_{1,k}]_{10}$

$[h^p_{2,k}]_{10}$

0 : [(0,0),(0,0)]
1 : [(0,0),(1,0)]
2 : [(0,0),(0,1)]
3 : [(0,0),(1,1)]
4 : [(1,0),(0,0)]
5 : [(1,0),(1,0)]
6 : [(1,0),(0,1)]
7 : [(1,0),(1,1)]
8 : [(0,1),(0,0)]
9 : [(0,1),(1,0)]
10 : [(0,1),(0,1)]
11 : [(0,1),(1,1)]
12 : [(1,1),(0,0)]
13 : [(1,1),(1,0)]
14 : [(1,1),(0,1)]
15 : [(1,1),(1,1)]

Transition #3. (1,1)    Transition #0. (0,0)    Transition #2. (0,1)    Transition #1. (1,0)

Memory $\nu = 2$, (k - 3)-th and (k - 2)-th transition

State ID $S_k$ : $[b_{2,k-2}, b_{1,k-2}), (b_{2,k-1}, b_{1,k-1})]$

Fig. 4b

EP 2 709 325 A1

ALU120803PAEP

Fig. 4c

Fig. 4d

Fig. 5

Fig. 6

Fig. 7

Signal via
band I

$\begin{array}{cc} \widetilde{s}_1 & -\widetilde{s}_2^{\;*} \\ \widetilde{s}_2 & \widetilde{s}_1^{\;*} \end{array}$

Signal via
band II

$\begin{array}{cc} \widetilde{s}_3 & -\widetilde{s}_4^{\;*} \\ \widetilde{s}_4 & \widetilde{s}_3^{\;*} \end{array}$

16

10

BS

**H**

26

STC
Decoder

STC
Decoder

Processed
via band I

Processed
via band II

20

Multi-band UE

Fig. 8

Fig. 9

Fig. 10

Fig. 11

```
┌─────────────────┐
│                 │
│   Composing     │
│                 │  ～32
└────────┬────────┘
         │
         ↓
┌─────────────────┐
│                 │
│  Transmitting   │
│                 │  ～34
└─────────────────┘
```

Fig. 12

```
┌─────────────────────┐
│                     │
│      Receiving      │
│                     │
└─────────────────────┘~ 42
           │
           ▼
┌─────────────────────┐
│                     │
│      Detecting      │
│                     │
└─────────────────────┘~ 44
```

Fig. 13

# EP 2 709 325 A1

Europäisches
Patentamt

European
Patent Office

Office européen
des brevets

## EUROPEAN SEARCH REPORT

Application Number

EP 12 30 6110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/098042 A1 (DENT PAUL WILKINSON [US]) 22 April 2010 (2010-04-22) * figure 8 * * paragraphs [0031], [0036], [0041] * ----- | 1-15 | INV. H04L25/03 H04L27/20 H04L25/02 H04L1/06 H04B7/04 |
| | | | TECHNICAL FIELDS SEARCHED (IPC) |
| | | | H04L H04B |

The present search report has been drawn up for all claims

| Place of search | Date of completion of the search | Examiner |
|---|---|---|
| Munich | 7 February 2013 | Belloni, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

34

**ANNEX TO THE EUROPEAN SEARCH REPORT**

**ON EUROPEAN PATENT APPLICATION NO.** EP 12 30 6110

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2013

| Patent document cited in search report | Publication date | Patent family member(s) | Publication date |
|---|---|---|---|
| US 2010098042 A1 | 22-04-2010 | CN 102257737 A<br>EP 2351239 A2<br>US 2010098042 A1<br>WO 2010046748 A2 | 23-11-2011<br>03-08-2011<br>22-04-2010<br>29-04-2010 |

EPO FORM P0459

For more details about this annex : see Official Journal of the European Patent Office, No. 12/82